(19) Europäisches Patentamt / European Patent Office / Office européen des brevets

(11) **EP 3 270 273 A1**

(12) **EUROPEAN PATENT APPLICATION**

(43) Date of publication:
**17.01.2018 Bulletin 2018/03**

(51) Int Cl.:
***G06F 3/044*** *(2006.01)*   ***G06F 3/041*** *(2006.01)*

(21) Application number: **17020252.7**

(22) Date of filing: **14.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.06.2016   JP 2016125319**
**29.05.2017   JP 2017105646**

(71) Applicant: **Hosiden Corporation**
**Yao-shi, Osaka 581-0071 (JP)**

(72) Inventor: **TOYOTA, Naoki**
**Yao-shi, Osaka, 581-0071 (JP)**

(74) Representative: **Beresford Crump LLP**
**16 High Holborn**
**London**
**WC1V 6BX (GB)**

(54) **TOUCH SENSING DEVICE**

(57)    An object of the invention is to reduce the number of electrodes in a touch sensing device. A touch sensing device (T1) includes a plurality of first electrodes (100a), at least one second electrode (100b), and a plurality of third electrodes (100c). The first electrodes (100a) are arrayed at a first height position, at intervals in a first direction (Y-Y'). The second electrode (100b) is disposed in a vacant region (R1) at the first height position, the vacant region being provided between two of the first electrodes (100a). The third electrodes (100c) are arrayed at a second height position, at intervals in a second direction (X-X'), and cross the first electrodes (100a) and the second electrode (100b). Either relation (1) or relation (2) is satisfied: (1) $W2 \geq W1 \times 2$; or (2) $W1 < W2 < W1 \times 2$, and $W2 \times N1 \geq W1 \times N1 + W1$, where W1 is a dimension in the second direction of each first electrode (100a), W2 is a dimension in the first direction of each second electrode (100b), and N1 is the number of the second electrodes, N1 being an integer of two or more.

FIG.1

## Description

Technical Field

The invention relates to touch sensing devices.

Background Art

A conventional mobile information terminal is disclosed in JP 2004-295730A. This mobile information terminal includes an upper casing, a lower casing, and a touch sensor disposed therebetween. The upper casing has a plurality of keys to be pressed for operation.

Summary of Invention

Technical Problem

A typical conventional touch sensor has a plurality of first and second electrodes. The first electrodes are of the same shape and size and arrayed at regular intervals in X-X' direction. The second electrodes are of the same shape and size and arrayed at regular intervals in Y-Y' direction, such that the second electrodes orthogonally cross the first electrodes at a height different from that of the first electrodes. Some of the first electrodes (or of the second electrodes) are positioned under the keys, and others not positioned under the keys. The former is used to detect a touch of a finger onto a corresponding key, while the latter is not. This means that the first electrodes (or the second electrodes) include one or more useless electrodes that are not used for touch detection.
The invention is made in the above circumstance and provides a touch sensing device with a reduced number of electrodes.

Solution to Problem

A touch sensing device according to one aspect of the invention includes a plurality of first electrodes, at least one second electrode, and a plurality of third electrodes. The first electrodes are arrayed at a first height position, at intervals in a first direction. A vacant region is provided between two of the first electrodes or directly on a side in the first direction to an endmost one of the first electrodes. The at least one second electrode is disposed in the vacant region at the first height position. The third electrodes are arrayed at a second height position, at intervals in a second direction, and cross the first and second electrodes. The second direction crosses the first direction. The first height position and the second height position are at different heights from each other in a third direction. The third direction is orthogonal to the first and second directions. Either relation (1) or relation (2) is satisfied:
(1) $W2 \geq W1 \times 2$; or (2) $W1 < W2 < W1 \times 2$, and $W2 \times N1 \geq W1 \times N1 + W1$. W1 is a dimension in the first direction of each first electrode, W2 is a dimension in the first direction of each second electrode, and N1 is the number of the second electrodes, N1 being an integer of two or more. In either case, the presence of the second electrode results in a reduced number of electrodes, at least by one first electrode.
Each of the first electrodes may include a plurality of first electrode portions. In each first electrode, the first electrode portions may be arranged in the second direction at the first height position, and each two of the first electrode portions that are adjacent to each other in the second direction may be connected to each other. The or each second electrode may include a plurality of second electrode portions being arranged in the second direction at the first height position. Each two of the second electrode portions that are adjacent to each other in the second direction may be connected to each other. Each of the third electrodes may include a plurality of third electrode portions. In each of the third electrodes, the third electrode portions may be arranged in the first direction at the second height position, and each two of the third electrode portions that are adjacent to each other in the first direction may be connected to each other.
Each of the third electrode portions may be disposed on one side in the third direction relative to a space defined by adjacent ones of the first electrode portions at the first height position.
Each of the third electrodes may further include an odd-form electrode portion. Each odd-form electrode portion may be disposed on the one side in the third direction relative to a space defined by two of the second electrode portions and two of the first electrode portions that are adjacent to each other at the first height position. Each odd-form electrode portion may be connected to one of the third electrode portions that is adjacent to the odd-form electrode portion. Each odd-form electrode portion may include a first portion and a second portion. Each first portion may be a portion of the odd-form electrode portion on a side of the corresponding second electrode portion. Each second portion may be a remaining portion of the odd-form electrode portion other than the first portion. The ratio between the dimension in the first direction of the first portion of each odd-form electrode portion and the dimension in the first direction of the second portion of the each odd-form electrode portion may be substantially the same as the ratio between the dimension in the first direction of each second electrode and the dimension in the first direction of each first electrode.

In the touch sensing device of this aspect, the presence of the odd-form electrode portion results in a reduced number of the third electrode portions.

If each third electrode does not include any odd-form electrode portions, a third electrode portion may be provided in place of the odd-form electrode portion.

A touch sensing device according to another aspect of the invention includes a plurality of fourth electrodes and a plurality of fifth electrodes. The fourth electrodes are arrayed at a first height position, at intervals in a first direction. The fifth electrodes are arrayed at a second height position, at intervals in a second direction, and cross the fourth electrodes. The second direction crosses the first direction. The first height position and the second height position are at different heights from each other in a third direction. The third direction is orthogonal to the first and second directions. A vacant region in which none of the fourth electrodes are present, and the vacant region is located between two of the fourth electrodes or directly on a side of an endmost one of the fourth electrodes. Either relation (1) or relation (2) is satisfied:

(1) $W4 \geq W3 \times 2$; or (2) $W3 < W4 < W3 \times 2$, and $W4 \times N2 \geq W3 \times N2 + W3$. W3 is a dimension in the first direction of each fourth electrode, W4 is a dimension in the first direction of the vacant region, and N2 is the number of the vacant regions, N2 being an integer of two or more. In either case, the presence of the vacant region or regions results in a reduced number of electrodes, at least by one fourth electrode.

Each of the fourth electrodes may include a plurality of fourth electrode portions. In each of the fourth electrodes, the fourth electrode portions may be arranged in the second direction at the first height position, and each two of the fourth electrode portions that are adjacent to each other in the second direction may be connected to each other. Each of the fifth electrodes may include a plurality of fifth electrode portions and at least one connecting portion. The fifth electrode portions of each fifth electrode may be arranged in the first direction at the second height position such as to be positioned outside the vacant region, each two of the fifth electrode portions that are adjacent to each other may be connected to each other. Each fifth electrode portion may be positioned on the one side in the third direction relative to a space defined by adjacent ones of the fourth electrode portions that are adjacent to each other at the first height position. The connecting portion of each fifth electrode may be positioned within the vacant region at the second height position and having a dimension in the second direction that is smaller than that of each fifth electrode portion.

The touch sensing device according to this aspect of the invention is unlikely to incorrectly detect an approach of a detection object in the vacant region. The reason for this is as follows. Within the vacant region no fourth electrodes are present, but only the connecting portions of the fifth electrodes are. The dimension in the second direction of each connecting portion is smaller at least than that of each fifth electrode portion. Therefore, if the touch sensing device is a touch sensor of a self-capacitance type, when a detection object approaches any of the connecting portions, the detection object is unlikely to electrostatically couple with the approached connecting portion. If the touch sensing device is of a mutual capacitance type, there are no fourth electrodes to electrostatically couple with connecting portions, so that there will be no false detection of an approach of the detection object in the vacant region.

Each of the connecting portions may be connected to a corresponding one of the fifth electrode portions. Alternatively, each fifth electrode may further include at least one half electrode portion. Each half electrode portion may be of a shape that is substantially one half of any one of the fifth electrode portions in the first direction. Each half electrode portion may be located at the second height position, between a connecting portion and one of the fifth electrode portions, and connected to the one fifth electrode portion. Each connecting portion may be connected to a corresponding one of the half electrode portions. Each connecting portion may have a dimension in the second direction that is smaller than that of each fifth electrode portion and than that of each half electrode portion.

Brief Description of Drawings

Fig. 1 is a schematic plan view of a touch sensing device according to a first embodiment of the invention.
Fig. 2A is a cross-sectional view of the touch sensing device, taken along line 2A-2A.
Fig. 2B is a cross-sectional view of a first variant of the touch sensing device, taken along line 2A-2A in Fig. 1.
Fig. 2C is a cross-sectional view of a second variant of the touch sensing device, taken along line 2A-2A.
Fig. 3A is a schematic plan view of first and second electrodes of the touch sensing device according to the first embodiment and its variants.
Fig. 3B is a schematic plan view of the third electrodes of the touch sensing device.
Fig. 4 is a schematic plan view of a touch sensing device according to a second embodiment of the invention.
Fig. 5 is a schematic plan view of a touch sensing device according to a third embodiment of the invention.
Fig. 6A is a cross-sectional view of the touch sensing device, taken along line 6A-6A in Fig. 5.

Fig. 6B is a cross-sectional view of a first variant of the touch sensing device, taken along line 6A-6A.
Fig. 6C is a cross-sectional view of a second variant of the touch sensing device, taken along line 6A-6A.
Fig. 7A is a schematic plan view of the fourth electrodes of the touch sensing device according to the third embodiment and its variants.
Fig. 7B is a schematic plan view of the fifth electrodes of the touch sensing device.
Fig. 8 is a schematic plan view of a touch sensing device according to a fourth embodiment of the invention.

In the brief description of the drawings above and the description of embodiments which follows, relative spatial terms such as "upper", "lower", "top", "bottom", "left", "right", "front", "rear", etc., are used for the convenience of the skilled reader and refer to the orientation of the touch sensing device and its constituent parts as depicted in the drawings. No limitation is intended by use of these terms, either in use of the invention, during its manufacture, shipment, custody, or sale, or during assembly of its constituent parts or when incorporated into or combined with other apparatus.

Description of Embodiments

The first to fourth embodiments and their variants of the invention will be hereinafter described.

First embodiment

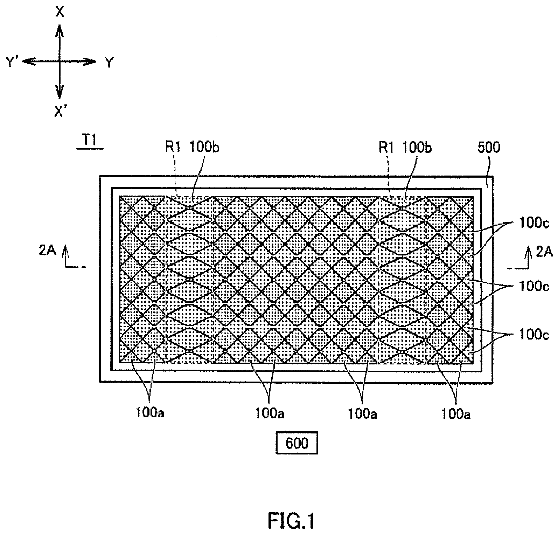

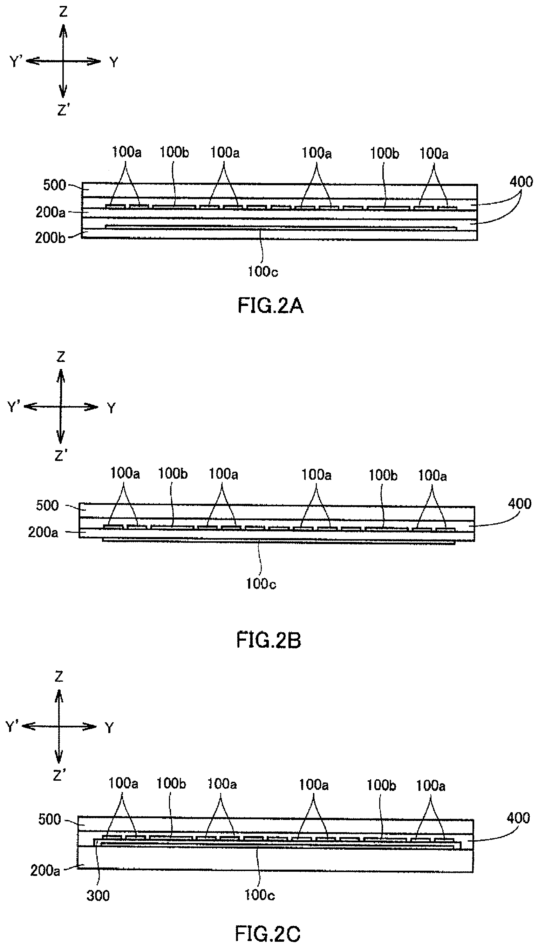

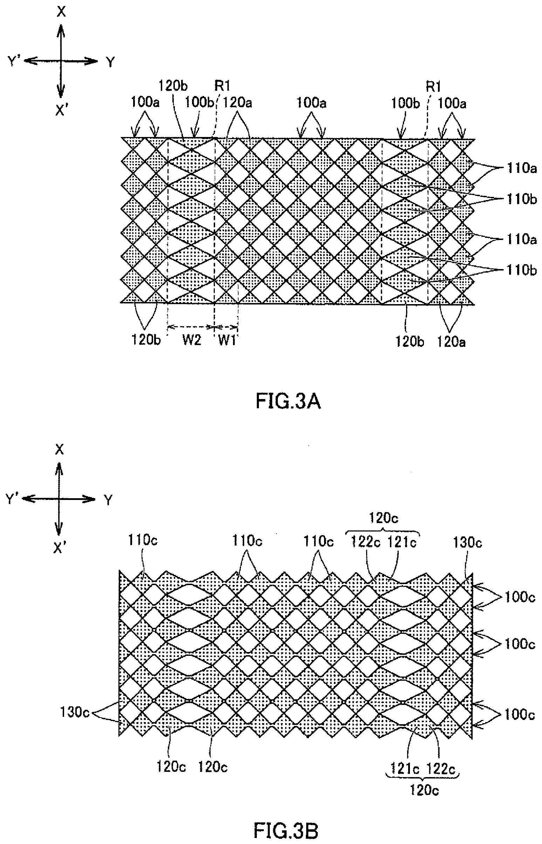

A touch sensing device T1 according to a first embodiment and its variants of the invention will be described with reference to Fig. 1 through Fig. 3B. The touch sensing device T1 includes a plurality of first electrodes 100a, at least one second electrode 100b, and a plurality of third electrodes 100c. Fig. 1 and 2A shows the touch sensing device T1 according to the first embodiment, Fig. 2B shows a first variant thereof, and Fig. 2C shows a second variant thereof. Fig. 3A shows the layout of the first and second electrodes of the touch sensing device T1 according to the first embodiment and its first and second variants. Fig. 3B shows the layout of the third electrodes of the touch sensing device T1 according to the first embodiment and its first and second variants.

Here, the Y-Y' direction shown in Fig. 1 through Fig. 3B corresponds to the first direction as defined in the appended claims. The X-X' direction shown in Figs. 1, 3A, and 3B corresponds to the second direction as defined in the appended claims. The X-X' direction may by any direction crossing the Y-Y' direction. The X-X' direction may be orthogonal to the Y-Y' direction as shown in Figs. 1, 3A, and 3B. The Z-Z' direction shown in Fig. 2A through Fig. 2C corresponds to the third direction as defined in the appended claims. The Z-Z' direction is orthogonal to the Y-Y' and X-X' directions. It should be noted that the first electrodes 100a to the third electrodes 100c in Figs. 1, 3A, and 3B are illustrated with different dot patterns for the convenience of distinction. These dot patterns are merely imaginary patterns and not actually provided on the first electrodes 100a to the third electrodes 100c.

The first electrodes 100a extend in the X-X' direction. The first electrodes 100a are arrayed at intervals in the Y-Y' direction at a first height position. The first electrodes 100a, excluding two specific ones to be described, may or may not be arrayed at regular intervals. The first electrodes 100a are not in contact with each other. There is a vacant region R1 defined between two (a pair) of the first electrodes 100a. There may be a plurality of vacant regions R1, each between a different pair of the first electrodes 100a. In Figs. 1 and 3A, a vacant regions R1 is defined between a pair of the first electrodes 100a, and another vacant region R1 is defined between another pair of the first electrodes 100a.

The first electrodes 100a may be strip-shaped extending in the X-X' direction. Alternatively, as best illustrated in Figs. 1 and 3A, the first electrodes 100a may each include a plurality of first electrode portions 110a. In each first electrode 100a, the first electrode portions 110a are arrayed along the X-X' direction at the first height position, and each two adjacent ones in the X-X' direction of the first electrode portions 110a are connected to each other. The first electrode portions 110a may each be of any shape. For example, the first electrode portions 110a may each be of a rhombic shape (see Figs. 1 and 3A), any polygonal shape other than rhombic shape, a circular or other curved-sided shape, or the like.

The first electrodes 100a may each further include at least one, half electrode portion 120a. The, or each, half electrode portion 120a is of a shape that is substantially one half of a first electrode portion 110a (see Fig. 3A), and positioned at the first height position, at the X-direction end and/or the X'-direction end of the first electrode 100a. The, or each, half electrode portion 120a is connected to the adjacent inside one of the first electrode portions 110a. If each first electrode 100a includes a half electrode portion 120a at the X-direction end and another half electrode portion 120a at the X'-direction end, the two half electrode portions 120a are symmetrically shaped in the X-X' direction. Alternatively, each first electrode 100a may include only one, half electrode portion 120a at the X- or X'-direction end thereof, and the other end of the first electrode 100a may be provided with a first electrode portion 110a. Still alternatively, each first electrode 100a may include no half electrode portions 120a, and each of the X- and X'-direction ends of the first electrode 100a may be provided with a first electrode portion 110a.

The at least one second electrode 100b extends in the X-X' direction. The or each second electrode 100b is disposed at the first height position, between the above-described pair of the first electrodes 100a, i.e. within the vacant region R1. The or each second electrode 100b may be parallel to the first electrodes 100a. The or each second electrode 100b is not in contact with any first electrode 100a. As shown in Figs. 1 and 3A, a plurality of second electrode 100b may be provided. More than one second electrode 100b may be disposed in a single vacant region R1, or each second electrode 100b may be disposed in a different vacant region R1.

The at least one second electrode 100b may each have a strip shape extending in the X-X' direction. Alternatively, as best illustrated in Figs. 1 and 3A, the at least one second electrode 100b may each include a plurality of second electrode portions 110b. The second electrode portions 110b of the or each second electrode 100b are arrayed along the X-X' direction at the first height position, and each two adjacent ones in the X-X' direction of the second electrode portions 110b are connected to each other. The second electrode portions 110b may each be of any shape. For example, the second electrode portions 110b may each be of a rhombic shape (see Figs. 1 and 3A), any polygonal shape other than rhombic shape, a circular or other curved-sided shape, or the like.

The at least one second electrode 100b may each further include at least one, half electrode portion 120b. The, or each, half electrode portion 120b is of a shape that is substantially one half of a second electrode portion 110b (see Fig. 3A), and positioned at the first height position, at the X-direction end and/or the X'-direction end of a respective second electrode 100b. The, or each, half electrode portion 120b is connected to the adjacent inside one of the second electrode portions 110b. If each second electrode 100b includes a half electrode portion 120b at the X-direction end and another half electrode portion 120b at the X'-direction end, the two half electrode portions 120b are symmetrical shaped in the X-X' direction. Alternatively, each second electrode 100b may include only one, half electrode portion 120b at the X- or X'-direction end thereof, and the other end of the second electrode 100b may be provided with a second electrode portion 110b. Still alternatively, each second electrode 100b may include no half electrode portions 120b, and each of the X- and X'-direction ends of second electrode 100b may be provided with a second electrode portion 110b.

Where each first electrode 100a has a Y-Y' direction dimension W1, and the or each second electrode 100b has a Y-Y' direction dimension W2, the dimensions W1 and W2 may satisfy either relation (1) or relation (2) as follows. Relation (1): W2 ≥ W1 × 2 (the dimension W2 is equal to, or larger than, twice the dimension W1). Here, the number of second electrodes 100b is at least one. The total number of the first and second electrodes 100a, 100b required in the touch sensing device T1 is fewer than the total number of first electrodes 100a required in a first comparative example in which there are only first electrodes 100a arrayed at regular intervals in the Y-Y' direction at the first height position. For example, if the dimension W2 is twice the dimension W1, because of the existence of the at least one second electrode 100b, the touch sensing device T1 requires one less electrode, i.e. one less first electrode 100a, compared to the first comparative example. If the dimension W2 is three times the dimension W1, because of the existence of the at least one second electrode 100b, the touch sensing device T1 requires two less electrodes, i.e. two less first electrodes 100a, compared to the first comparative example. If the dimension W2 is four times the dimension W1, because of the existence of the at least one second electrode 100b, the touch sensing device T1 requires three less electrodes, i.e. three less first electrodes 100a, compared to the first comparative example.

Relation (2): W1 < W2 < W1 x 2, and W2 × N1 ≥ W1 × N1 + W1, where N1 is the number of the second electrodes 100b, N1 being an integer of two or more (where two or more second electrodes 100b are provided and the dimension W2 is larger than the dimension W1 and smaller than twice the dimension W1, W2 × the number of the second electrodes 100b ≥ W1 x the number of the second electrodes 100b + W1). For example, when W1 is 1 mm, W2 is 1.2 mm, and the number of the second electrodes 100b is 5, a relation "1.2 × 5 ≥ 1 × (5 + 1)" is satisfied. When W1 is 1 mm, W2 is 1.5 mm, and the number of the second electrodes 100b is 2, a relation "1.5 × 2 ≥ 1 × (2 + 1)" is satisfied. In either case, the total number of the first and second electrodes 100a, 100b required in the touch sensing device T1 is fewer than the total number of the first electrodes 100a required in the first comparative example described above. Specifically, because of the existence of the two or more second electrodes 100b, the touch sensing device T1 requires one less electrode, i.e. one less first electrode 100a, compared to the first comparative example.

It should be noted that the electrode region, in which the first electrodes 100a and the second electrode 100b are arrayed at the first height position, may include at least one sensing region and the at least one vacant region R1. The sensing region is a part of the electrode region that is other than the vacant region R1 and used for detecting approach (such as touch) of a detection object (finger or stylus pen) to the touch sensing device T1. The vacant region R1 is a part of the electrode region in which approach (such as touch) of a detection object (finger or stylus pen) to the touch sensing device T1 will not be detected.

The third electrodes 100c extend in the Y-Y' direction. The third electrodes 100c are arrayed at intervals in the X-X' direction at a second height position. The second height position is different from the first height position in the Z-Z' direction. The third electrodes 100c may or may not be arrayed at regular intervals. The third electrodes 100c are not in contact with each other. The third electrodes 100c may preferably cross the first electrodes 100a and the second electrode 100b, at any or right angles.

If the first and second electrodes 100a and 100b are strip-shaped extending in the X-X' direction, the third electrodes 100c may be strip-shaped extending in the Y-Y' direction. If each first electrode 100a includes the first electrode portions 110a and the second electrode 100b includes the second electrode portions 110b, each third electrode 100c may include a plurality of third electrode portions 110c.

In each third electrode 100c, the third electrode portions 110c are arrayed along the Y-Y' direction at the second height position, and each two adjacent ones in the Y-Y' direction of the third electrode portions 110c that are connected to each other. The third electrode portions 110c may each be of any shape. For example, the third electrode portions 110c may each be of a rhombic shape (see Figs. 1 and 3A), any polygonal shape other than rhombic shape, a circular or other curved-sided shape, or other shapes.

Each third electrode portion 110c is located on the Z'-direction side relative to a respective space defined by adjacent first electrode portions 110a at the first height position. More specifically, each third electrode portion 110c is located on the Z'-direction side relative to a respective space defined by adjacent four first electrode portions 110a at the first height position (i.e. two first electrode portions 110a of one first electrode 100a and two first electrode portions 110a of another first electrode 100a adjacent to the one first electrode 100a). For any shape of the first electrode potions 110a, each third electrode portion 110c of the third electrodes 100a may be of substantially the same shape as that of the space defined by four adjacent first electrode portions 110a at the first height position. If the first electrodes 100a includes the half electrode portions 120a, each third electrode portion 110c at the X-or X'-direction end is located on the Z'-direction side relative to a respective space at the first height position defined by two half electrode portions 120a adjacent to each other in the Y-Y' direction and two first electrode portions 110a adjacent to each other in the Y-Y' direction and adjacent to these half electrode portions 120a in the X-X' direction, in other words, defined by the half electrode portion 120a and the adjacent first electrode portion 110a of one first electrode 100a and the half electrode portion 120a and the adjacent first electrode portion 110a of another first electrode 100a that is adjacent to the one first electrode 100a in the Y-Y' direction.

Each third electrode 100c may further include at least two odd-form electrode portions 120c in addition to the third electrode portions 110c. Each two odd-form electrode portions 120c are located at the second height position and on the Y- and Y'-direction sides relative to a respective second electrode 100b. It is preferable that each odd-form electrode portion 120c is preferably positioned on the Z'-direction side relative to a respective space at the first height position defined by two second electrode portions 110b adjacent to each other in the X-X' direction and two first electrode portions 110a adjacent to each other in the X-X' direction and adjacent to these second electrode portions 110b in the Y-Y' direction. If the first electrodes 100a includes the half electrode portions 120a and the at least one second electrode 100b includes the half electrode portions 120b, each odd-form electrode portion 120c at the X-or X'-direction end may preferably located on the Z'-direction side relative to a respective space at the first height position defined by the half electrode portion 120a and the adjacent first electrode portion 110a of one first electrode 100a and the half electrode portion 120b and the adjacent second electrode portion 110b of the second electrode 100b that is adjacent to the one first electrode in the Y-Y' direction. Each two odd-form electrode portions 120c are connected to each other, and each of the two odd-form electrode portions 120c is connected to the respective adjacent third electrode portion 110c.

The odd-form electrode portions 120c may each be of a kite shape (see Figs. 1 and 3A)), any polygonal shape other than kite shape, a circular or other curved-sided shape, or the like. Each two odd-form electrode portions 120c may be symmetrically shaped with respect to each other in the Y-Y' direction. Each odd-form electrode portion 120c includes a first portion 121c and the remaining portion, namely a second portion 122c. The first portions 121c are closer to the second electrode portions 110b than the second portions 122c are.

In each odd-form electrode portion 120c, the first portion 121c has a Y-Y' direction larger than that of the second portion 122c and an X-X' direction dimension that is substantially the same as that of the second portion 122c. The second portion 122c may have the same shape as that of a half of the third electrode portion 110c in the Y-Y' direction. For example, if each odd-form electrode portion 120c is of a kite shape, each second portion 122c is of a triangular shape corresponding to a half of each third electrode portion 110c in the Y-Y' direction, and each first portion 121c is of a triangular shape having an X-X' direction dimension that is equal to that of each second portion 122c and a Y-Y' direction dimension that is larger than that of each second portion 122c. If each odd-form electrode portions 120c is of a polygonal shape other than kite shape, each second portion 122c is of a shape corresponding to a half of each third electrode portion 110c in the Y-Y' direction, and each first portion 121c is of a shape having an X-X' direction dimension that is equal to that of each second portion 122c and a Y-Y' direction dimension that is larger than that of each second portion 122c. If the odd-form electrode portions 120c is of a circular or curved-sided shape, the second portion 122c is of a semi-circular shape corresponding to a half of each third electrode portion 110c in the Y-Y' direction, and each first portion 121c is of a semi-circular shape having an X-X' direction dimension that is equal to that of each second portion 122c and a Y-Y' direction dimension that is larger than that of each second portion 122c.

The ratio between the Y-Y' direction dimension of the first portion 121c and that of the second portion 122c may preferably be substantially the same as the ratio between the Y-Y' direction dimension of the or each second electrode 100b and that of each first electrode 100a. For example, if the dimension W2 is twice as large as the dimension W1, the Y-Y' direction dimension of the first portion 121c is twice as large as that of the second portion 122c. If W2 is 1.5 times as large as W1, the Y-Y' direction dimension of the first portion 121c is 1.5 times as large as that of the second portion 122c. For any shape of the first electrode portions 110a and the second electrode portions 110b, each odd-form electrode portion 120c of the third electrode 100c may be of substantially the same shape as that of the space defined by two first electrode portions 110a adjacent to each other in the X-X' direction and two second electrode portions 110b adjacent to each other in the X-X' direction and adjacent to these first electrode portions 110a in the Y-Y' direction.

If the third electrodes 100c do not include any odd-form electrode portions 120c, the odd-form electrode portions 120c may be substituted by third electrode portions 110c, which may be located at the second height position, among two second electrode portions 110b and two first electrode portions 110a that are adjacent to each other at the first height position.

Each third electrode 100c may further include at least one, half electrode portion 130c. The, or each, half electrode portion 130c is of a shape that is substantially one half of a third electrode portions 110c (see Fig. 3B), and is positioned at the Y-direction end or the Y'-direction end of the third electrode portion 110c. The, or each, half electrode portion 130c is connected to the adjacent inside one of the third electrode portions 110c. If each third electrode portion 110c includes a half electrode portion 130c at the Y-direction end and another half electrode portion 130c at the Y'-direction end, the two half electrode portions 130c are symmetrically shaped in the Y-Y' direction. Alternatively, each third electrode 100c may include only one, half electrode portion 130c at the Y-or Y'-direction end thereof, and the other end of the third electrode 100c may be provided with a third electrode portion 110c. Still alternatively, each third electrode 100c may include no half electrode portions 130c, and each of the Y-and Y'-direction ends of the third electrode 100c may be provided with a third electrode portion 110c. If no third electrode portions 110c are interposed between each half electrode portion 130c and a corresponding odd-form electrode portion 120c, the each half electrode portion 130c and the corresponding odd-form electrode portion 120c may be directly connected to each other.

The touch sensing device T1 may take a structure (A) in which a base 200a and a base 200b are further provided (see Fig. 2A), a structure (B) in which a base 200a is further provided (see Fig. 2B), or a structure (C) in which a base 200a and an insulation layer 300 are further provided (see Fig. 2C). The base 200a and the base 200b may each be a glass plate, a plastic plate, a plastic film, or the like. The base 200a and the base 200b each has a Z-direction face and a Z'-direction face.

In the structure (A), the first electrodes 100a and the second electrode 100b of one of the above described aspects are arrayed on the Z-direction face of the base 200a. The third electrodes 100c of one of the above described aspects are arrayed on the Z-direction face of the base 200b. The Z'-direction face of the base 200a and the Z-direction face of the base 200b are bonded together with an adhesion layer 400. The Z-direction face of the base 200a is located at the first height position, and the Z-direction face of the base 200b is located at the second height position.

In the structure (B), the first electrodes 100a and the second electrode 100b of one of the above described aspects are arrayed on the Z-direction face of the base 200a. The third electrodes 100c of one of the above described aspects are arrayed on the Z'-direction face of the base 200a. The Z-direction face of the base 200a is located at the first height position, and the Z'-direction face of the base 200a is located at the second height position.

In the structure (C), the third electrodes 100c of one of the above described aspects are arrayed on the Z-direction face of the base 200a. The insulation layer 300 is provided on the Z-direction face of the base 200a so as to cover the third electrodes 100c. The first electrodes 100a and the second electrode 100b of one of the above described aspects are provided on the Z-direction face of the insulation layer 300. The Z-direction face of the base 200a is located at the second height position, and the Z-direction face of the insulation layer 300 is located at the first height position.

The touch sensing device T1 may further includes a cover panel 500. In any of the above structures (A) to (C), the cover panel 500 may be bonded to the Z-direction face of the base 200a with another adhesion layer 400. Alternatively, the cover panel 500 may be disposed separately from the base 200a, e.g. on the Z-direction side relative to the Z-direction face of the base 200a. In the latter case, the touch sensing device T1 may further include at least one functional layer (not shown). The functional layer may function as a hard coating layer, an anti-glare layer, an antireflection layer, a low-reflection layer, a protection layer, an anti-Newtonian layer, a strength retention layer, and/or a stain-proof layer. The functional layer may preferably be positioned between the cover panel 500 and the base 200a. The cover panel 500 may also serve as a functional layer. It should be noted that the cover panel 500 and/or the functional layer may be omitted.

The touch sensing device T1 may further include a plurality of first leader lines (not shown), at least one second leader line (not shown), and a plurality of third leader lines (not shown). The first leader lines are respectively connected to the first electrodes 100a. The second leader line is connected to the second electrode 100b. The third leader lines are respectively connected to the third electrodes 100c.

The touch sensing device T1 may further include a detector 600, such as a detection IC, and connecting means (not shown). For example, the connecting means may be a flexible circuit board, including a plurality of conductive lines respectively connected to the first, second, and third leader lines. The detector 600 includes a plurality of connecting terminals. The connecting terminals may be pins or the like, which are respectively connected to the first, second, and third electrodes 100a, 100b, and 100c, via the first, second, and third leader lines and the conductive lines of connecting means.

If the touch sensing device T1 is of a self-capacitance type, when a detection object (finger or stylus pen) approaches at least one of the first, second, and third electrodes 100a, 100b, and 100c, electrostatic capacitance generated between the approached electrode and the detection object changes, and in accordance with the electrostatic capacitance change, an electrical signal (voltage or current) from the electrode changes. The detector 600 sequentially detects electrical signals (voltages or currents) from the first, second, and third electrodes 100a, 100b, and 100c and sequentially compares these signals with a threshold value. The threshold value is stored in a memory provided within or outside the detector 600. When changes in electrical signals exceed the threshold value in at least one of the first electrodes 100a and at least one of the third electrodes 100c, the detector 600 judges that the detection object has approached the intersection of such first electrode 100a and such third electrode 100c. When changes in electrical signals exceed the threshold value in at least one of the third electrodes 100c and the or at least one second electrode 100b, the detector 600 performs cancelation or other processing, not judging that the detection object has approached the vacant region R1. It should be appreciated that detection time required for the detector 600 of a self-capacitance type is time required for the detector 600 to perform a cycle of sequential detection of electrical signals from the first, second, and third electrodes 100a, 100b, and 100c.

If the touch sensing device T1 is of a mutual capacitance type, one of the electrodes set at the first height position (i.e. the first electrodes 100a and the second electrode 100b) and the electrode set at the second height position (i.e. the third electrodes 100c) serves as drive electrodes, and the other electrode set serves as detection electrodes (sensor electrodes). Each drive electrode and each sensor electrode intersecting in the Z-Z' direction forms an electrostatically coupled pair. When a detection object approaches at least one intersecting pair of the drive and sensor electrodes, the approach changes electrostatic capacitance generated between the or each intersecting pair of drive and sensor electrodes, and the electrostatic capacitance change results in a change in electrical signals (voltage or current) from the sensor electrode. The detector 600 sequentially supplies drive pulses to the drive electrodes, sequentially detects electrical signals (voltages or currents) from the sensor electrodes, and sequentially compares these signals with a threshold value. The threshold value is stored in a memory within or outside the detector 600. The detector 600 is configured to judge that a detection object has approached at the intersection of a drive electrode and a sensor electrode when the detector 600 detects a change in electrical signals exceeding the threshold value from the sensor electrode while supplying drive pulses to the drive electrode. If the at least one second electrode 100b is a sensor electrode, when a change in electrical signals from the second electrode 100b exceeds the threshold value, the detector 600 may perform cancelation or other processing, not judging that the detection object has approached the vacant region R1. Alternatively, if the at least one second electrode 100b is a drive electrode, the detector 600 may preferably supply drive pulses to the second electrode 100b. In this case, when changes in electrical signals from any of the third electrodes 100c (sensor electrodes) exceed the threshold value, the detector 600 may perform cancelation or other processing, not judging that the detection object has approached the vacant region R1 provided with the second electrode 100b to which the drive pulse has been supplied. It should be appreciated that detection time required for the detector 600 of a mutual capacitance type is time required for the detector 600 to perform a cycle of sequential detection of electrical signals (voltage or current) from the sensor electrodes.

The touch sensing device T1 is able to distinguish the first touch from the second touch defined as follows. By "first touch" is meant approach of a detection object (e.g., a finger) to an area spanning the vacant region R1, a region on the Y-direction side relative to the vacant region R1 (which may be hereinafter referred to simply as the "Y-direction-side region"), and a region on the Y'-direction-side region relative to the vacant region R1 (which may be hereinafter referred to simply as the "Y'-direction-side region"). By "second touch" is meant approach of two detection objects (e.g., two fingers) respectively to the Y-direction-side region and the Y'-direction-side region, substantially simultaneously, avoiding the vacant region R1. Here, the Y-direction-side region and the Y'-direction-side region form part of the sensing region.

If the touch sensing device T1 is of a self-capacitance type, when the first touch is made, i.e. when a detection object (e.g., a finger) approaches the vacant region R1, the Y-direction-side region, and the Y'-direction-side region, the following changes (1) to (3) occur in electrical signals: (1) There are changes exceeding the threshold value in electrical signals from the second electrode 100b positioned within the vacant region R1 as viewed from the Z direction and from at least one of the third electrodes 100c whose odd-form electrode portion 120c or third electrode portion or portions 110c is positioned within the vacant region R1 as viewed from the Z direction. (2) There is a change exceeding the threshold value in electrical signals from at least one of the first electrodes 100a positioned within the Y-direction-side region as viewed from the Z direction and from at least one of the third electrodes 100c whose third electrode portion or portions 110c are positioned within the Y-direction-side region as viewed from the Z direction. (3) There are changes exceeding the threshold value in electrical signals from at least one of the first electrodes 100a positioned within the Y'-direction-side region as viewed from the Z direction, and from at least one of the third electrodes 100c whose third electrode portion or portions 110c are positioned within the Y'-direction-side region as viewed from the Z direction. When the above changes (1) to (3) occur, the detector 600 judges that the first touch has been made.

If the touch sensing device T1 is of a mutual capacitance type, when the first touch is made, i.e. when a detection object (e.g., a finger) approaches the vacant region R1, the Y-direction-side region, and the Y'-direction-side region, the following changes (4) to (6) occur in electrical signals: (4) There is a change exceeding the threshold value in electrical signals either from the second electrode 100b (sensor electrode) positioned within the vacant region R1 as viewed from the Z direction, or from at least one of the third electrodes 100c (sensor electrodes) whose odd-form electrode portion(s) 120c or third electrode portion(s) 110c is positioned within the vacant region R1 as viewed from the Z direction. (5) There is a change exceeding the threshold value in electrical signals either from at least one of the first electrodes 100a (sensor electrodes) positioned within the Y-direction-side region as viewed from the Z direction, or from at least one of the third electrodes 100c (sensor electrodes) whose third electrode portion(s) 110c is positioned within the Y-direction-side region as viewed from the Z direction. (6) There is a change exceeding the threshold value in electrical signals either from at least one of the first electrodes 100a (sensor electrodes) positioned within the Y'-direction-side region as viewed from the Z direction, or from at least one of the third electrodes 100c (sensor electrodes) whose third electrode portion(s) 110c is positioned within the Y'-direction-side region as viewed from the Z direction. When the above changes (4) to (6) occur, the detector 600 judges that the first touch has been made.

If the touch sensing device T1 is of a self-capacitance type, when the second touch is made, i.e. when a detection object (e.g., a finger) approaches the Y-direction-side region and the Y'-direction-side region, there are electrical signal changes of types (2) and (3) above. When electrical signal changes of both the types (2) and (3) exceed the threshold value, the detector 600 judges that the second touch has been made.

If the touch sensing device T1 is of a self-capacitance type, when the second touch is made, i.e. when a detection object (e.g., a finger) approaches the Y-direction-side region and the Y'-direction-side region, there are electrical signal changes of types (5) and (6) above. When electrical signal changes of both the types (5) and (6) exceed the threshold value, the detector 600 judges that the second touch has been made.

The touch sensing device T1 described above has at least the following technical features. Firstly, as described above, the touch sensing device T1 has a reduced number of electrodes, at least by a first electrode 100a, because of the presence of the at least one second electrode 100b. This results in reduction of at least one first leader line to be connected to a first electrode 100a and at least one connecting terminal of the detector 600. Therefore, it is possible to save an area for mounting the detector 600 if the detector 600 is mounted on connecting means, such as a flexible circuit board. Further, the reduced number of the electrodes results in reduction of the processing time of the detector 600.

Secondly, the touch sensing device T1 is able to distinguish the first touch from the second touch as described above.

Thirdly, if the third electrodes 100c include the odd-form electrode portions 120c, the touch sensing device T1 has a reduced number of third electrodes 100c for the reason below. In each odd-form electrode portion 120c, the ratio between the Y-Y' direction dimension of the first portion 121c and that of the second portion 122c is substantially the same as the ratio between the Y-Y' direction dimension of the or each second electrode 100b and that of each first electrode 100a Accordingly, each odd-form electrode portion 120c has a Y-Y' direction dimension larger than that of each third electrode portion 110c.

Second embodiment

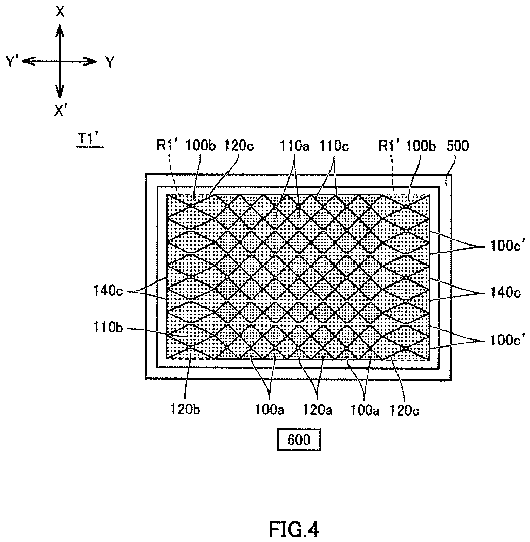

The following describes a touch sensing device T1' according to the second embodiment of the invention with reference to Fig. 4. The touch sensing device T1' has the same configuration as the touch sensing device T1, except for the following differences (1) and (2). Difference (1): At least one vacant region R1' and at least one second electrode 100b are provided at different positions from those of the vacant region R1 and the second electrode 100b of the touch sensing device T1. Difference (2): The third electrodes 100c' have different configurations from those of the third electrodes 100c of the touch sensing device T1. These differences will be described in detail, without repeating descriptions on the touch sensing device T1' that overlap with those of the touch sensing device T1. Fig. 4 shows the Y-Y' and X-X' directions in a similar manner to Fig. 1. With regard to the Z-Z' direction in this embodiment, reference should be made to Fig. 2A to Fig. 2C.

The at least one vacant region R1' is located, not between two first electrodes 100a, but directly on the Y-direction side with respect to the first electrode 100a at the Y-direction end and/or directly on the Y'-direction side to the first electrode 100a at the Y'-direction end. In other words, the or each vacant region R1' is located on an outer side of the array of the first electrodes 100a.

The at least one second electrode 100b is provided, not between two first electrodes 100a, but directly on the Y-direction side to the first electrode 100a at the end in the Y direction (i.e. within the vacant region R1' on the Y-direction side) and/or directly on the Y'-direction side to the first electrode 100a at the end in the Y' direction (i.e. within the vacant region R1' on the Y'-direction side). In other words, the or each second electrode 100b is located on an outer side of the array of the first electrodes 100a.

Each of the third electrodes 100c' may further include at least one odd-form electrode portion 140c, in addition to a plurality of third electrode portions 110c and at least one odd-form electrode portion 120c. The at least one odd-form electrode portion 140c is of the same shape as that of the first portion 121c of each odd-form electrode portion 120c and may preferably be positioned at the Y-direction end and/or at the Y'-direction end in each third electrode 100c'. Each odd-form electrode portion 140c is connected to the adjacent inside one of the odd-form electrode portion 120c. If each third electrode 100c' includes two odd-form electrode portion 140c at the Y-direction end and the Y'-direction end, these odd-form electrode portions 140c are symmetrically shaped in the Y-Y' direction. The odd-form electrode portions 140c may be omitted and replaced with odd-form electrode portions 120c or third electrode portions 110c.

The touch sensing device T1' described above provides similar technical effects as those of the touch sensing device T1.

Third embodiment

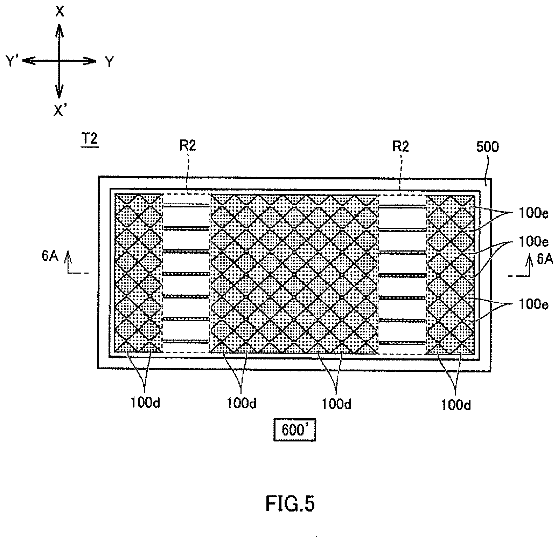

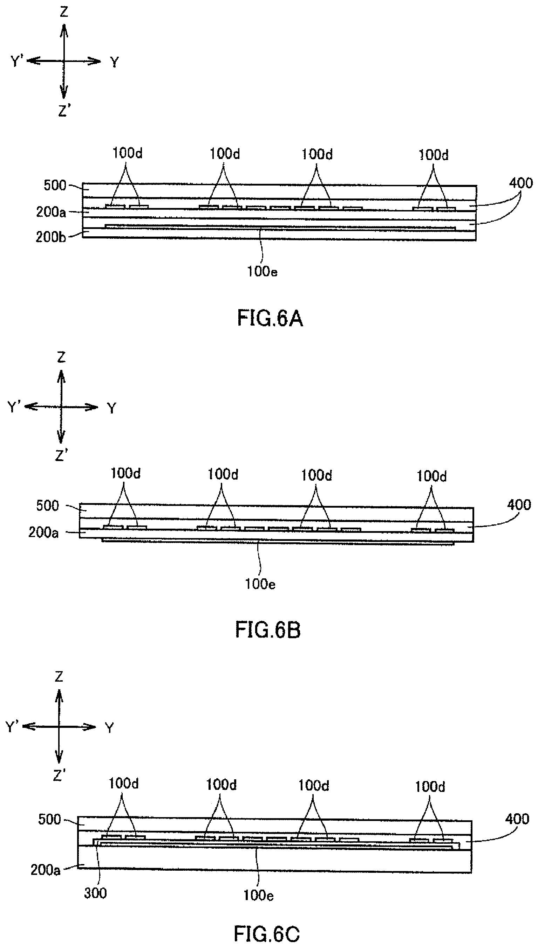

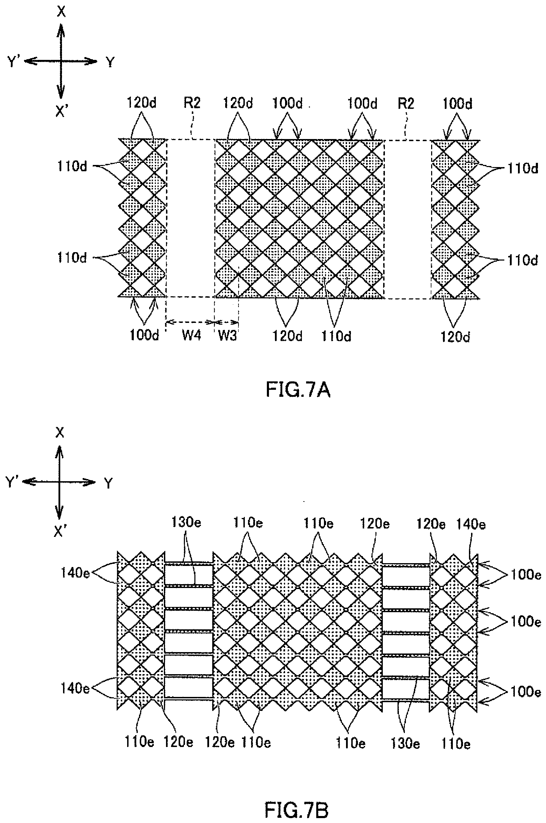

The following describes a touch sensing device T2 according to a third embodiment and its variants of the invention with reference to Fig. 5 through Fig. 7B. The touch sensing device T2 includes a plurality of fourth electrodes 100d and a plurality of fifth electrodes 100e. Fig. 5 and 6A shows the touch sensing device T2 according to the third embodiment, Fig. 6B shows a first variant thereof, and Fig. 6C shows a second variant thereof. Fig. 7A shows the layout of the fourth electrodes of the touch sensing device T2 according to the third embodiment and its first and second variants. Fig. 7B shows the layout of the fifth electrodes of the touch sensing device T2 according to the first embodiment and its first and second variants.

The Y-Y' direction shown in Fig. 5 through Fig. 7B corresponds to the first direction as defined in the appended claims. The X-X' direction shown in Figs. 5, 7A, and 7B corresponds to the second direction as defined in the appended claims. The X-X' direction may be any direction crossing the Y-Y' direction. The X-X' direction may be orthogonal to the Y-Y' direction as shown in Figs. 5, 7A, and 7B. The Z-Z' direction shown in Fig. 6A through Fig. 6C corresponds to the third direction as defined in the appended claims. The Z-Z' direction is orthogonal to the Y-Y' and X-X' directions. It should be noted that the fourth electrodes 100d and the fifth electrodes 100e in Figs. 5, 7A, and 7B are illustrated with different dot patterns for the convenience of distinction. These dot patterns are merely imaginary patterns and not actually provided on the fourth electrodes 100d and the fifth electrodes 100e.

The fourth electrodes 100d may have similar configuration and arrangement to those of the first electrodes 100a, except for the following differences. The fourth electrodes 100d may be strip-shaped extending in the X-X' direction. Alternatively, the fourth electrodes 100d may each include a plurality of fourth electrode portions 110d. The fourth electrodes 100d may each further include at least one, half electrode portion 120d.

There is a vacant region R2 defined between two (a pair) of the fourth electrodes 100d. None of the fourth electrodes 100d are present within the vacant region R2. There may be a plurality of vacant regions R2, each between a different pair of the fourth electrodes 100d. In Figs. 5 and 7A, the vacant regions R2 are defined between a pair of the fourth electrodes 100d, and another vacant region R2 is defined between another pair of the fourth electrodes 100d.

Where each fourth electrode 100d has a Y-Y' direction dimension W3, and the or each vacant region R2 has a Y-Y' direction dimension W4, the dimensions W3 and W4 may satisfy either relation (1) or relation (2) as follows. Relation (1): $W4 \geq W3 \times 2$ (the dimension W4 is equal to, or larger than, twice the dimension W3). Here, the number of vacant regions R2 is at least one. The total number of the fourth electrodes 100d required in the touch sensing device T2 is fewer than the total number of fourth electrodes 100d in a second comparative example in which there are only fourth electrodes 100d arrayed at regular intervals in the Y-Y' direction at the first height position. For example, if the dimension W4 is twice the dimension W3, because of the existence of the at least one vacant region R2, the touch sensing device T2 requires at least one fewer electrode, i.e. at least one fewer fourth electrode 100d, compared to the second comparative example. If the dimension W4 is three times the dimension W3, because of the existence of the at least one vacant region R2, the touch sensing device T2 requires at least two fewer electrodes, i.e. two fewer fourth electrodes 100d, compared to the second comparative example. If the dimension W4 is four times the dimension W3, because of the existence of the at least one vacant region R2, for each vacant region R2 the touch sensing device T2 requires three fewer electrodes, i.e. three fewer fourth electrodes 100d, compared to the second comparative example.

Relation (2): $W3 < W4 < W3 \times 2$, and $W4 \times N2 \geq W3 \times N2 + W3$, where N2 is the number of the vacant regions R2, N2 being an integer of two or more (where two or more vacant regions R2 are provided and the dimension W4 is larger than the dimension W3 and smaller than twice the dimension W3, W4 × the number of the vacant regions $R2 \geq$ W3 × the number of the vacant regions R2 + W3). For example, when W3 is 1 mm, W4 is 1.2 mm, and the number of the vacant region R2 is 5, a relation "$1.2 \times 5 \geq 1 \times 5 + 1$" is satisfied. When W3 is 1 mm, W4 is 1.5 mm, and the number of the vacant region R2 is 2, a relation "$1.5 \times 2 \geq 1 \times 2 + 1$" is satisfied. In either case, the total number of the fourth electrodes 100d required in the touch sensing device T2 is fewer than the total number of the fourth electrodes 100d required in the second comparative example described above. Specifically, because of the existence of the two or more vacant regions R2, the touch sensing device T2 requires at least one fewer electrode, i.e. one fewer fourth electrode 100d, compared to the second comparative example.

It should be noted that the electrode region or regions in which the fourth electrodes 100d are arrayed at the first height position serves as a sensing region or regions for detecting approach (such as touch) of a detection object (finger or stylus pen) to the touch sensing device T2. The vacant region R2 is a region in which approach (such as touch) of a detection object (finger or stylus pen) to the touch sensing device T2 will not be detected.

The fifth electrodes 100e extend in the Y-Y' direction. The fifth electrodes 100e are arrayed at intervals in the X-X' direction at a second height position. The second height position is different from the first height position in the Z-Z' direction. The fifth electrodes 100e may or may not be arrayed at regular intervals. The fifth electrodes 100e are not in contact with each other. The fifth electrodes 100e may preferably cross with the fourth electrodes 100d, at any or right angles.

If the fourth electrodes 100d are strip-shaped extending in the X-X' direction, the fifth electrodes 100e may be strip-shaped extending in the Y-Y' direction. If each fourth electrode 100d includes the fourth electrode portions 110d, each fifth electrode 100e may include a plurality of fifth electrode portions 110e.

In each fifth electrode 100e, the fifth electrode portions 110e are arrayed along the Y-Y' direction at the second height position, and each two adjacent ones in the Y-Y' direction of the fifth electrode portions 110e are connected to each other. The fifth electrode portions 110e may each be of any shape. For example, the fifth electrode portions 110e may each be of a rhombic shape (see Figs. 5 and 7A), any polygonal shape other than rhombic shape, a circular or other curved-sided shape, or other shapes.

Each fifth electrode portion 110e is located between adjacent fourth electrode portions 110d at the first height position. More specifically, each fifth electrode portion 110e is located on the Z'-direction side relative to a respective space defined by four fourth electrode portions 110d adjacent to each other at the first height position (i.e. two fourth electrode portions 110d of one fourth electrode 100d and two fourth electrode portions 110d of another fourth electrode 100d adjacent to the one fourth electrode 100d). For any shape of the fourth electrode potions 110d, each fifth electrode portion 110e of the fifth electrodes 100e may be of substantially the same shape as that of the space defined by four adjacent fourth electrode portions 110e at the first height position. If the fourth electrodes 100d include the half electrode portions 120d, each fifth electrode portion 110e at the X- or X'-direction end is located on the Z'-direction side relative to a respective space at the first height position defined by two half electrode portions 120d adjacent to each other in the Y-Y' direction and two fourth electrode portions 110d adjacent to each other in the Y-Y' direction and adjacent to these half electrode portions 120d in the X-X' direction, in other words, defined by the half electrode portion 120d and the adjacent fourth electrode portion 110d of one fourth electrode 100d and the half electrode portion 120a and the adjacent fourth electrode portion 110d of another fourth electrode 100d that is adjacent to the one fourth electrode 100d in the Y-Y' direction.

Each fifth electrode 100e may further include at least a pair of half electrode portions 120e and at least one connecting portion 130e in addition to the fifth electrode portions 110e. Each half electrode portion 120e is of a shape that is substantially one half of a fifth electrode portion 110e (see Fig. 7B). The or each pair of half electrode portions 120e are positioned at the second height position, on the Y- and Y'-direction sides with respect to the or a respective vacant region R2. The half electrode portions 120e in each pair are respectively connected to the fifth electrode portions 110e directly on the Y- and Y'-direction sides thereof. In each pair, the half electrode portion 120e on the Y-direction side and the half electrode portion 120e on the Y'-direction side are symmetrical shaped in the Y-Y' direction. Each half electrode portion 120e may preferably be located on the Z'-direction side relative to a respective space defined by a respective vacant region R2 and two fourth electrode portions 110d that are adjacent to each other in the X-X' direction at the first height position. If the fourth electrodes 100d include the half electrode portions 120d, each half electrode portions 120e at the X-or X'-direction end may preferably be located on the Z'-direction side relative to a respective space defined by a vacant region R2, and a half electrode portion 120d, and the fourth electrode portion 110d that is adjacent to the half electrode portion 120d in the X-X' direction at the first height position.

The or each connecting portion 130e of each fifth electrode 100e is positioned within the vacant region R2 and connects two half electrode portions 120e. Each connecting portion 130e has an X-X' direction dimension smaller at least than that of each fifth electrode portion 110e. The X-X' direction dimension of the connecting portion 130e may be smaller than that of each half electrode portions 120e. It should be appreciated that if the touch sensing device T2 is of a mutual capacitance type, the or each vacant region R2 includes no fourth electrodes 100d. Specifically, as the vacant region R2 includes no electrodes to couple with the connecting portions 130e, each connecting portion 130e may have any X-X' direction dimension without limitation. If the touch sensing device T1 is of a self-capacitance type, the connecting portions 130e per se may serve as electrode portions in the vacant region R2 for detecting approach of a detection object. If a threshold value for a detector 600' (to be described) is set as X% of a maximum change value in electrostatic capacitance (i.e., the maximum change value of electrical signals from the fifth electrodes 100e) of the fifth electrode portions 110e, the X-X' direction dimension of each connecting portion 130e may preferably be smaller than X% of the X-X' direction dimension of the fifth electrode portions 110e. For example, if a threshold value for the detector 600' is set as 50% of the maximum change value in electrostatic capacitance of the fifth electrode portions 110e (i.e., a maximum change value in electrical signals from the fifth electrodes 100e), each connecting portion 130e may preferably have an X-X' direction dimension that is smaller than a half (smaller than 50%) of the X-X' direction dimension of each fifth electrode 100e. In this case, when a detection object approaches a vacant region R2 to cause the electrostatic capacitance of the corresponding connecting portion 130e (electrical signal from the fifth electrode 100e) to change to the maximum value, this value does not reach the threshold value. Therefore, the detector 600' does not judge that the detection object has approached the vacant region R2.

Each of the fifth electrodes 100e may further include at least one half electrode portion 140e. The, or each, half electrode portion 140e is of a shape that is substantially one half of a fifth electrode portion 110e (see Fig. 7B), and positioned at the second height position, at the Y-direction end and/or the Y'-direction end of the fifth electrode 100e. The, or each, half electrode portion 140e is connected to the adjacent inside one of the fifth electrode portions 110e. If each fifth electrode 100e includes a half electrode portion 140e at the Y-direction end and another half electrode portion 140e at the Y'-direction end, the two half electrode portions 140e are symmetrically shaped in the Y-Y' direction. Alternatively, each fifth electrode 100e may include only one, half electrode portion 140e at the Y- or Y'-direction end thereof, and the other end of the fifth electrode 100e may be provided with fifth electrode portion 110e. Still alternatively, each fifth electrode 100e may include no half electrode portions 140e, and each of the Y- and Y'-direction ends of the fifth electrode 100e may be provided with a fifth electrode portion 110e. If no fifth electrode portions 110e are interposed between each half electrode portion 140e and a corresponding half electrode portion 120e, the each half electrode portion 140e and the corresponding half electrode portion 120e may be connected to each other.

The touch sensing device T2 may take any one of the structures (A), (B), or (C) as described for the touch sensing device T1 shown in Figs. 6A, 6B, and 6C, respectively.

Particularly, in the structure of Fig 6A, the fourth electrodes 100d of one of the above described aspects are arrayed on the Z-direction face of a base 200a. The fifth electrodes 100e of one of the above described aspects are arrayed on the Z-direction face of a base 200b. The Z'-direction face of the base 200a and the Z-direction face of the base 200b are bonded together with an adhesion layer 400. The Z-direction face of the base 200a is located at the first height position, and the Z-direction face of the base 200b is located at the second height position.

In the structure of Fig 6B, the fourth electrodes 100d of one of the above described aspects are arrayed on the Z-direction face of a base 200a. The fifth electrodes 100e of one of the above described aspects are arrayed on the Z'-direction face of the base 200a. The Z-direction face of the base 200a is located at the first height position, and the Z'-direction face of the base 200a is located at the second height position.

In the structure of Fig 6C, the fifth electrodes 100e of one of the above described aspects are arrayed on the Z-direction face of a base 200a. Over the Z-direction face of the base 200a, an insulation layer 300 is disposed so as to cover the fifth electrodes 100e. The fourth electrodes 100d of one of the above described aspects are provided on the Z-direction face of the insulation layer 300. The Z-direction face of the base 200a is located at the second height position, and the Z-direction face of the insulation layer 300 is located at the first height position.

The touch sensing device T2 may further include a cover panel 500. The cover panel 500 has the same configuration as that of the touch sensing device T1. The touch sensing device T2 may further include at least one functional layer (not shown) with the same configuration as that of the touch sensing device T1. The touch sensing device T2 may further include a plurality of fourth leader lines (not shown)and a plurality of fifth leader lines (not shown). The fourth leader lines are respectively connected to the fourth electrodes 100d. The fifth leader lines are respectively connected to the fifth electrodes 100e. The touch sensing device T2 may further include a detector 600', such as a detection IC and connecting means (not shown). For example, the connecting means may be a flexible circuit board, including a plurality of conductive lines respectively connected to the fourth and fifth leader lines. The detector 600' includes a plurality of connecting terminals. The connecting terminals may be pins or the like, which are respectively connected to the fourth electrodes 100d and the fifth electrodes 100e via the fourth and fifth leader lines and the conductive lines of connecting means.

If the touch sensing device T2 is a touch sensor of a self-capacitance type, when a detection object (finger or stylus pen) approaches at least one of the fourth and fifth electrodes 100d and 100e, electrostatic capacitance generated between the approached electrode and the detection object changes, and in accordance with the electrostatic capacitance change, an electrical signal (voltage or current) from the electrode changes. The detector 600' sequentially detects electrical signals (voltages or currents) from the fourth and fifth electrodes 100d and 100e, and sequentially compares these signals with a threshold value. The threshold value is stored in a memory provided within or outside the detector 600'. When changes in electrical signals exceed the threshold value in at least one of the fourth electrodes 100d and at least one of the fifth electrodes 100e, the detector 600 judges that the detection object has approached the intersection of such fourth electrode 100d and such fifth electrode 100e. When a detection object approaches a vacant region R2, the detector 600' detects no changes in electrical signal from the fourth electrodes 100d. On the other hand, the detector 600' is able to detect changes in electrical signals from the fifth electrodes 100e, but the changes do not exceed the threshold value. It should be appreciated that detection time required for the detector 600' of a mutual capacitance type is time required for the detector 600' to perform a cycle of sequential detection of electrical signals (voltage or current) from the fourth and fifth electrodes 100d and 100e.

If the touch sensing device T2 is of a mutual capacitance type, the fourth electrodes 100d and the fifth electrodes 100e serve as drive electrodes and sensor electrodes, respectively, or as sensor electrodes and drive electrodes, respectively. Each drive electrode and each sensor electrode intersecting in the Z-Z' direction form an electrostatically coupled pair. When a detection object approaches at least one intersecting pair of the drive and sensor electrodes, electrostatic capacitance generated between the or each intersecting pair of drive and sensor electrodes changes, and in accordance with the electrostatic capacitance change, an electrical signal (voltage or current) from the sensor electrode changes. The detector 600' sequentially supplies drive pulses to the drive electrodes and also sequentially detects electrical signals (voltages or currents) from the sensor electrodes and sequentially compares these signals with a threshold value. The threshold value is stored in a memory within or outside the detector 600'. The detector 600' is configured to judge that a detection object has approached at the intersection of a drive electrode and a sensor electrode when the detector 600' detects a change in electrical signals exceeding the threshold value from the sensor electrode while supplying drive pulses to the drive electrode. When a detection object approaches a vacant region R2, the detector 600' detects no changes in electrical signals from the sensor electrodes. It should be appreciated that detection time required for the detector 600' to perform a cycle of sequential detection of electrical signals (voltage or current) from the sensor electrodes.

The touch sensing device T2 described above has the following technical features. Firstly, as described above, the touch sensing device T2, has a reduced number of electrodes, at least by a fourth electrode 100d, because of the presence of the at least one the vacant region R2. As a result, the touch sensing device T2 provides the same effects as those of the touch sensing device T1.

Secondly, for the following reasons, the touch sensing device T2 is unlikely to incorrectly detect an approach of a detection object in the vacant region R2. Within a vacant region R2 no fourth electrodes 100d are present, but only the connecting portions 130e of the fifth electrodes 100e are. The X-X' direction dimension of each connecting portion 130e is smaller at least than that of each fifth electrode portion 110e. Therefore, if the touch sensing device T2 is of a self-capacitance type, when a detection object approaches any of the connecting portions 130e, the detection object is unlikely to electrostatically couple with the approached connecting portion 130e. If the touch sensing device T2 is of a mutual capacitance type, there are no fourth electrodes 100d to electrostatically couple with connecting portions 130e, so that there will be no false detection of an approach of the detection object in the vacant region R2.

Thirdly, the touch sensing device T2 is easy to bend. As described above, only the connecting portions 130e are present in the vacant region R2, it is easy to bend the touch sensing device T2 at the part corresponding to the vacant region R2. In particular, flexibility of the touch sensing device T2 can be increased by punching holes in the touch sensing device T2 at the part corresponding to the vacant region R2 to form the device with holes in this part. Specifically, the holes may be provided in at least one of the cover panel 500, the base 200a, the base 200b, the insulation layer 300, the adhesion layer 400, and the functional layer of the touch sensing device T2, at the part corresponding to the at least one vacant region R2.

Fourth embodiment

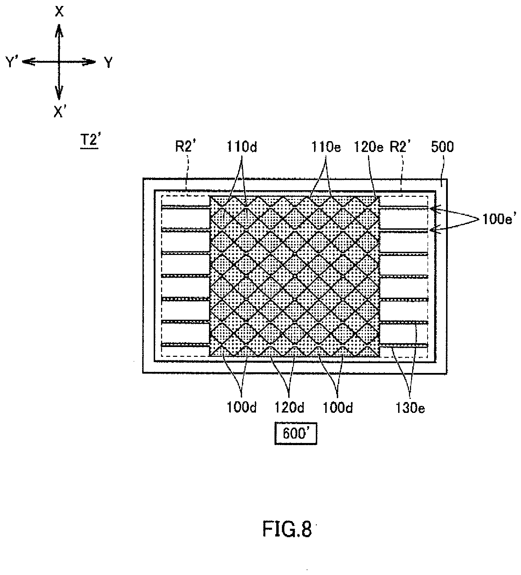

The following describes a touch sensing device T2' according to the fourth embodiment of the invention with reference to Fig. 8. The touch sensing device T2' has the same configuration as the touch sensing device T2, except for the following differences (1) and (2). Difference (1): At least one vacant region R2' is provided at different positions from those of the vacant region R2 of the touch sensing device T2. Difference (2): The fifth electrodes 100e' have different configurations from those of the fifth electrodes 100e of the touch sensing device T2. These differences will be described in detail, without repeating descriptions of the touch sensing device T2' that overlap with those of the touch sensing device T2. Fig. 8 shows the Y-Y' and X-X' directions in a similar manner to Fig 5. With regard to the Z-Z' direction in this embodiment, reference should be made to Figs. 6A to 6C.

In the fourth embodiment of the invention with reference to Fig. 8, two vacant regions R2' are located, not between two fourth electrodes 100d, but directly on the Y-direction side of the endmost fourth electrode 100d at the Y-direction end and directly on the Y'-direction side of the endmost fourth electrode 100d at the Y'-direction end. In other words, each vacant region R2' is located on an outer side of the array of the fourth electrode 100d. Although two vacant regions R2' are shown in Fig. 8, it will be appreciated that in alternative variants only one vacant region R2' may be provided, either at the Y-direction side or at the Y'-direction side.

Each of fifth electrodes 100e' may include a plurality of fifth electrode portions 110e, at least one half electrode portion 120e, and at least one connecting portion 130e. The or each connecting portion 130e includes a first end (Y-direction end or Y'-direction end) and a second end opposite to the first end. The first end of each connecting portion 130e is connected to the corresponding half electrode portion 120e. The second end of each connecting portion 130e is not connected to a half electrode portion 120e, but may be connected to a fifth leader line. In each fifth electrode 100e', the connecting portion 130e is positioned at or Y-direction end and/or at or Y'-direction end. In each fifth electrode 100e', one of the half electrode portions 120e may be replaced with a fifth electrode portion 110e. This fifth electrode portion 110e is located directly on an inner side of and connected to the corresponding connecting portion 130e.

The touch sensing device T2' described above provides similar technical effects as those of the touch sensing device T2.

It should be noted that the touch sensing device described above is not limited to the above embodiments but may be modified in any manner within the scope of the appended claims.

It should be appreciated that the touch sensing devices of the above embodiments and variants thereof are described above by way of examples only. The materials, shapes, dimensions, numbers, arrangements, and other configurations of the constituents of the touch sensing devices may be modified in any manner if they can perform similar functions. The configurations of the embodiments and the variants described above may be combined in any possible manner. The first direction of the invention may be any direction in which the first electrodes of the invention are arrayed at intervals. The second direction of the invention may be any direction crossing the first direction. The third direction of the invention may be any direction orthogonal to the first and second directions.

Reference Signs List

T1, T1': touch sensing device
  100a: first electrode
  110a: first electrode portion
  120a: half electrode portion
R1, R1': vacant region
  100b: second electrode
  110b: second electrode portion
  120b: half electrode portion
  100c: third electrode
  110c: third electrode portion
  120c: odd-form electrode portion
  121c: first portion
  122c: second portion
  130c: half electrode portion
T2, T2': touch sensing device
  100d: fourth electrode
  110d: fourth electrode portion
  120d: half electrode portion
R2, R2': vacant region
  100e, 100e': fifth electrode
  110e: fifth electrode portion
  120e: half electrode portion
  130e: connecting portion
  140e: half electrode portion
  200a: base
  200b: base
  300: insulation layer
  400: adhesion layer
  500: cover panel
  600, 600': detector

**Claims**

1. A touch sensing device (T1, T1') comprising:

    a plurality of first electrodes (100a) arrayed at a first height position, at intervals in a first direction (Y-Y'), with a vacant region (R1, R1') being provided between two of the first electrodes (100a) or directly on a side in the first direction (Y-Y') to an endmost one of the first electrodes (100a);
    at least one second electrode (100b) disposed in the vacant region (R1, R1') at the first height position,; and
    a plurality of third electrodes (100c) arrayed at a second height position, at intervals in a second direction (X-X'), the second direction (X-X') crossing the first direction (Y-Y'), the third electrodes (100c) crossing the first (100a) and second (100b) electrodes, wherein

the first height position and the second height position are at different heights from each other in a third direction (Z-Z'), the third direction being orthogonal to the first (Y-Y') and second (X-X') directions, and

either relation (1) or relation (2) is satisfied:

$$(1)\ W2 \geq W1 \times 2;$$

or

$$(2)\ W1 < W2 < W1 \times 2,\ \text{and}\ W2 \times N1 \geq W1 \times N1 + W1$$

where W1 is a dimension in the first direction (Y-Y') of each first electrode (100a), W2 is a dimension in the first direction (Y-Y') of each second electrode (100b), and N1 is the number of the second electrodes (100b), N1 being an integer of two or more.

2. The touch sensing device (T1, T1') according to claim 1, wherein

each of the first electrodes (100a) includes a plurality of first electrode portions (110a),

in each first electrode (100a), the first electrode portions (110a) are arranged in the second direction (X-X') at the first height position, and each two of the first electrode portions (110a) that are adjacent to each other in the second direction (X-X') are connected to each other,

the or each second electrode (100b) includes a plurality of second electrode portions (110b), the second electrode portions (110b) being arranged in the second direction (X-X') at the first height position, and each two of the second electrode portions (110b) that are adjacent to each other in the second direction (X-X') are connected to each other,

each of the third electrodes (100c) includes a plurality of third electrode portions (110c), and

in each of the third electrodes (100c), the third electrode portions (110c) are arranged in the first direction (Y-Y') at the second height position, and each two of the third electrode portions (110c) that are adjacent to each other in the first direction (Y-Y') are connected to each other.

3. The touch sensing device (T1, T1') according to claim 2, wherein

each of the third electrode portions (110c) are disposed on one side (Z') in the third direction relative to a space defined by adjacent ones of the first electrode portions (110a) at the first height position, and

each of the third electrodes (100c) further includes an odd-form electrode portion (120c),

each odd-form electrode portion (120c) is disposed on the one side (Z') in the third direction relative to a space defined by two of the second electrode portions (110b) and two of the first electrode portions (110a) that are adjacent to each other at the first height position, and each odd-form electrode portion (120c) is connected to one of the third electrode portions (110c) that is adjacent to the odd-form electrode portion,

each odd-form electrode portion (120c) includes:

a first portion (121c) being a portion of the odd-form electrode portion (120c) on a side of the corresponding second electrode portion (110b), and

a second portion (122c) being a remaining portion of the odd-form electrode portion (120c) other than the first portion (121c), and

a ratio between a dimension in the first direction (Y-Y') of the first portion (121c) of each odd-form electrode portion (120c) and a dimension in the first direction (Y-Y') of the second portion (122c) of the each odd-form electrode portion (120c) is the same as a ratio between the dimension in the first direction (Y-Y') of each second electrode (100b) and the dimension in the first direction (Y-Y') of each first electrode (100a).

4. A touch sensing device (T2, T2') comprising:

a plurality of fourth electrodes (100d) arrayed at a first height position, at intervals in a first direction (Y-Y'); and

a plurality of fifth electrodes (100e) arrayed at a second height position, at intervals in a second direction (X-X'), the second direction (X-X') crossing the first direction (Y-Y'), the fifth electrodes (100e) crossing the fourth electrodes (100d), wherein

the first height position and the second height position are at different heights from each other in a third direction (Z-Z'), the third direction (Z-Z') being orthogonal to the first (Y-Y') and second (X-X') directions, and

at least one vacant region (R2, R2') in which none of the fourth electrodes (100d) are present, the vacant region being located between two of the fourth electrodes (100d) or directly on a side of an endmost one of the fourth electrodes (100d), and

either relation (1) or relation (2) is satisfied:

$$(1)\ W4 \geq W3 \times 2;$$

or

$$(2)\ W3 < W4 < W3 \times 2,\ \text{and}\ W4 \times N2 \geq W3 \times N2 + W3$$

where W3 is a dimension in the first direction (Y-Y') of each fourth electrode (100d), W4 is a dimension in the first direction (Y-Y') of the vacant region (R2, R2'), and N2 is the number of the vacant regions (R2, R2'), N2 being an integer of two or more.

5. The touch sensing device (T2, T2') according to claim 4, wherein
each of the fourth electrodes (100d) includes a plurality of fourth electrode portions (110d),
in each of the fourth electrodes (100d), the fourth electrode portions (110d) are arranged in the second direction (X-X') at the first height position, and each two of the fourth electrode portions (110d) that are adjacent to each other in the second direction (X-X') are connected to each other,
each of the fifth electrodes (100e) includes:

a plurality of fifth electrode portions (110e), the fifth electrode portions (110e) being arranged in the first direction (Y-Y') at the second height position such as to be positioned outside the vacant region (R2, R2'), each two of the fifth electrode portions (110e) that are adjacent to each other are connected to each other, and each fifth electrode portion (110e) being positioned on the one side (Z') in the third direction relative to a space defined by adjacent ones of the fourth electrode portions (110d) that are adjacent to each other at the first height position, and
at least one connecting portion (130e), the connecting portion (130e) being positioned within the vacant region (R2, R2') at the second height position and having a dimension in the second direction (X-X') that is smaller than that of each fifth electrode portion (110e).

6. The touch sensing device (T2, T2') according to claim 5, wherein each of the connecting portions (130e) of the fifth electrodes (100e) is connected to a corresponding one of the fifth electrode portions (110e).

7. The touch sensing device (T2, T2') according to claim 5, wherein
each of the fifth electrodes (100e) further includes at least one half electrode portion (120e),
the or each half electrode portion (120e) is of a shape that is one half of any one of the fifth electrode portions (110e) in the first direction (Y-Y'), located at the second height position, between a connecting portion (130e) and one of the fifth electrode portions (110e), and connected to the one fifth electrode portion (110e),
each of the connecting portions (130e) is connected to a corresponding one of the half electrode portions (120e) and has a dimension in the second direction (X-X') that is smaller than that of each fifth electrode portion (110e) and than that of each half electrode portion (120e).

8. The touch sensing device (T2, T2') according to any one of claims 5 to 7, wherein each of the connecting portions (130e) has a dimension in the second direction (X-X') that is smaller than 50% of that of each fifth electrode (100e).

9. A touch sensing device (T1, T1') comprising:

a plurality of first electrodes (100a) arrayed in a first plane, the first electrodes each extending in a second direction (X-X') and being spaced from each other at intervals in a first direction (Y-Y'), the first direction (Y-Y') crossing the second direction (X-X');
at least one second electrode (100b) extending in the second direction (X-X') and, being positioned either between two of the first electrodes (100a) or directly adjacent to an endmost one of the first electrodes (100a) in the first direction (Y-Y'); and
a plurality of third electrodes (100c) arrayed in a second plane, the third electrodes extending in the first direction (Y-Y') and being spaced at intervals in the second direction (X-X'), the third electrodes (100c) crossing the first (100a) and second (100b) electrodes, wherein

the first plane and the second plane are spaced from each other in a third direction (Z-Z'), the third direction being orthogonal to the first (Y-Y') and second (X-X') directions, and

either relation (1) or relation (2) is satisfied:

$$(1)\ W2 \geq W1 \times 2;$$

or

$$(2)\ W1 < W2 < W1 \times 2,\ \text{and}\ W2 \times N1 \geq W1 \times N1 + W1$$

where W1 is a dimension in the first direction (Y-Y') of each first electrode (100a), W2 is a dimension in the first direction (Y-Y') of each second electrode (100b), and N1 is the number of the second electrodes (100b), N1 being an integer of two or more.

**10.** A touch sensing device (T2, T2') comprising:

a plurality of fourth electrodes (100d) arrayed in a first plane, the fourth electrodes each extending in a second direction (X-X') and being spaced from each other at intervals in a first direction (Y-Y'), the first direction (Y-Y') crossing the second direction (X-X'); and

a plurality of fifth electrodes (100e) arrayed in a second plane, the fifth electrodes extending in the first direction (Y-Y') and being spaced at intervals in the second direction (X-X'), the fifth electrodes (100e) crossing the fourth electrodes (100d), wherein

the first plane and the second plane are spaced from each other in a third direction (Z-Z'), the third direction (Z-Z') being orthogonal to the first (Y-Y') and second (X-X') directions, and

at least one vacant region (R2, R2') in which none of the fourth electrodes (100d) are present, the vacant region being positioned either between two of the fourth electrodes (100d) or directly adjacent to an endmost one of the fourth electrodes (100d), and

either relation (1) or relation (2) is satisfied:

$$(1)\ W4 \geq W3 \times 2;$$

or

$$(2)\ W3 < W4 < W3 \times 2,\ \text{and}\ W4 \times N2 \geq W3 \times N2 + W3$$

where W3 is a dimension in the first direction (Y-Y') of each fourth electrode (100d), W4 is a dimension in the first direction (Y-Y') of the vacant region (R2, R2'), and N2 is the number of the vacant regions (R2, R2'), N2 being an integer of two or more.

FIG.1

Z
Y' ←→ Y
Z'

100a  100b  100a      100a  100b  100a

500

200a

200b

400

100c

## FIG.2A

Z
Y' ←→ Y
Z'

100a  100b  100a      100a  100b  100a

500

200a

400

100c

## FIG.2B

Z
Y' ←→ Y
Z'

100a  100b  100a      100a  100b  100a

500

200a

400

300        100c

## FIG.2C

FIG.3A

FIG.3B

FIG.4

FIG.5

Z
Y' ← → Y
Z'

100d     100d     100d     100d

500
200a                                                    400
200b

100e

**FIG.6A**

Z
Y' ← → Y
Z'

100d     100d     100d     100d

500
200a                                                    400

100e

**FIG.6B**

Z
Y' ← → Y
Z'

100d     100d     100d     100d

500
200a                                                    400

300              100e

**FIG.6C**

FIG.7A

FIG.7B

FIG.8

Europäisches
Patentamt

European
Patent Office

Office européen
des brevets

# EUROPEAN SEARCH REPORT

Application Number

EP 17 02 0252

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X | US 2015/227233 A1 (YI CHIEN-YU [TW] ET AL) 13 August 2015 (2015-08-13) <br> * abstract; figures 1A,1B * <br> * column 28 - column 38 * <br> ----- | 1-3,9 | INV.<br>G06F3/044<br>G06F3/041 |
| X | US 2015/362960 A1 (CHANG CHEN-HSIN [TW] ET AL) 17 December 2015 (2015-12-17) <br> * abstract; figures 7,10 * <br> * paragraph [0025] - paragraph [0030] * <br> * paragraph [0050] - paragraph [0051] * <br> ----- | 4-8,10 | |
| X | TW 201 405 387 A (AU OPTRONICS CORP [TW]) 1 February 2014 (2014-02-01) <br> * figures 1-5 * <br> ----- | 4-8,10 | |
| X,P | US 2016/291780 A1 (NAMKUNG JUN [KR]) 6 October 2016 (2016-10-06) <br> * abstract; figures 1-13 * <br> * paragraph [0027] - paragraph [0098] * <br> ----- | 4-8,10 | |
| | | | **TECHNICAL FIELDS SEARCHED**      (IPC) |
| | | | G06F |

The present search report has been drawn up for all claims

| Place of search | Date of completion of the search | Examiner |
|---|---|---|
| Berlin | 5 December 2017 | Ernst, Monika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 02 0252

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2017

| Patent document cited in search report | | Publication date | Patent family member(s) | | Publication date |
|---|---|---|---|---|---|
| US 2015227233 | A1 | 13-08-2015 | CN 104834416 A<br>TW 201531911 A<br>US 2015227233 A1 | | 12-08-2015<br>16-08-2015<br>13-08-2015 |
| US 2015362960 | A1 | 17-12-2015 | CN 105183203 A<br>TW M500924 U<br>TW 201546677 A<br>US 2015362960 A1 | | 23-12-2015<br>11-05-2015<br>16-12-2015<br>17-12-2015 |
| TW 201405387 | A | 01-02-2014 | CN 102929426 A<br>TW 201405387 A | | 13-02-2013<br>01-02-2014 |
| US 2016291780 | A1 | 06-10-2016 | KR 20160119934 A<br>US 2016291780 A1 | | 17-10-2016<br>06-10-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004295730 A